Europäisches Patentamt

European Patent Office

Office européen des brevets

(11) Publication number: **0 473 856 A1**

# EUROPEAN PATENT APPLICATION

(21) Application number: 90313298.3

(22) Date of filing: **07.12.90**

(51) Int. Cl.5: **C04B 35/00**, C04B 41/50, C04B 32/00

(30) Priority: **09.08.90 US 565373**

(43) Date of publication of application:
**11.03.92 Bulletin 92/11**

(84) Designated Contracting States:
**AT BE CH DE ES FR GB IT LI LU NL SE**

(71) Applicant: **Ogura, Atsushi**
**14-30 Yukinoshita 2-chome**
**Kamakura-shi Kanagawa-ken 248(JP)**

(72) Inventor: **Ogura, Atsushi**
**14-30 Yukinoshita 2-chome**
**Kamakura-shi Kanagawa-ken 248(JP)**

(74) Representative: **Jump, Timothy John Simon et al**
**VENNER, SHIPLEY & CO. 368 City Road**
**London EC1V 2OA(GB)**

(54) Homogeneous solid solution material and method of manufacturing the same.

(57) A metal oxide-ceramic composite powder, consisting of fine ceramic particles having a non-ferrous metal oxide coating firmly bonded to the surface thereof, is melted at high temperature and then cooled to produce a material in the form of a solid solution, in which the non-ferrous metal oxide component and the ceramic component are substantially homogeneously mixed together. Also, the non-ferrous metal oxide-ceramic composite powder can be mixed with fine particles of a second ceramic and/or particles of a metal, and the mixture is baked to produce a sintered material.

Test Example - 1.
Test for IN PUT Voltage of NiAlCrOx Element
(Electric resistance VS Temp)

FIG. 1

This invention relates to a material consisting of at least a ceramic component and a non-ferrous metal oxide component formed into a homogeneous solid solution and relates also to a method of manufacturing the same.

It is generally difficult of manufacture a non-ferrous metal oxide-ceramic material having a uniform and homogeneous microstructure even when a mixture of fine particles of a plurality of kinds of inorganic powder materials is sintered or melted after being thoroughly kneaded. That is, in order to obtain a composite in the form of a homogeneous solid solution of a plurality of kinds of components, it is necessary to thoroughly homogeneously mix fine particles of those components. However, it is physically difficult to thoroughly homogeneously mix such components. Further, due to differences between the melting points of the components, separation of one of the components having a higher melting point from another having a lower melting point inevitably occurs. Thus, it is very difficult to manufacture a composite having a thoroughly homogeneous microstructure which can satisfy the desired physical properties and functional requirements.

In an effort to solve such a problem, studies have been undertaken for manufacturing a non-ferrous metal oxide-ceramic material by baking a mixture of super-fine particles of a plurality of kinds of components having a fine particle size in the order of the angstrom unit. In spite of such an effort, satisfactory results have not yet been attained.

Thus, a composite including a ceramic component and a non-ferrous metal oxide component thoroughly homogeneously compounded together has not existed up to now. Even if such a composite were known, its physical properties could only be estimated from those of the individual components before being mixed.

With a view to solving the prior art problems pointed out above, it is an object of the present invention to provide a novel composite in the form of a thoroughly homogeneous solid solution having at least a ceramic component and a non-ferrous metal oxide component and a method of manufacturing the same.

Another object of the present invention is to provide a material comprising a metal component additionally homogeneously compounded with the ceramic component and the non-ferrous metal oxide component described above.

According to the present invention there is provided a metal oxide-ceramic material as defined in Claim 1 appended hereto.

The material according to the present invention can be in the form of a solid solution provided by melting and cooling a non-ferrous metal oxide-ceramic composite powder of fine ceramic particles having a non-ferrous metal oxide coating, preferably in crystalline form, firmly bonded to the surface thereof.

Preferred forms and embodiments of the invention are defined in the sub-claims appended hereto.

In an embodiment of the present invention, this material is manufactured by melting a non-ferrous metal oxide-ceramic composite powder of fine ceramic particles having a non-ferrous metal oxide coating firmly bonded to the surface thereof as described above, in a high-temperature furnace thereby turning the powder into a solid solution of a non-ferrous metal oxide component and a ceramic component.

In another embodiment of the present invention, the material is manufactured by melting a non-ferrous metal oxide-ceramic composite powder of fine ceramic particles having a non-ferrous metal oxide coating firmly bonded to the surface thereof as described above, at a high temperature and spraying the melt onto an article to be coated thereby coating the article with a solid solution of a non-ferrous metal oxide component and a ceramic component.

The material thus obtained is in the form of a homogeneous solid solution of the metal oxide and ceramic components. Where the non-ferrous metal oxide is nickel oxide, aluminium oxide, copper oxide, or chromium oxide, or combinations thereof, the material provides an electrical insulator or a semiconductor having an excellent heat resistivity and a high mechanical rigidity and can find many applications as a material of various industrial products. For example, the material according to the present invention can be used as a material of electrical and electronic parts exhibiting excellent functional characteristics, such as, heat generating elements, thermistors, varistors, magnetic coatings, dielectric elements, pyroelectric elements, piezoelectric elements, photoelectric elements, photomagnetic elements and the like.

According to still another embodiment of the present invention, the material is manufactured by sintering fine particles of a second ceramic and/or particles or a metal together with the non-ferrous metal oxide-ceramic composite powder of the fine particles of a first ceramic having a non-ferrous metal oxide coating firmly bonded to the surface thereof.

This sintered material according to the present invention is obtained by mixing the non-ferrous metal oxide-ceramic composite powder with the second fine ceramic particles and/or the metal particles, adding water and/or a binder to a mixture and kneading the mixture to turn it into a sludge, charging the sludge into a mold which is under vibration, heating the sludge in the mold to vaporize the water therefrom, imparting pressure by a pressure plate to the sludge charged in the vibrating mold, heating the sludge again to shape it into a molded block, separating the molded block from the mold, and baking the molded block at a high temperature.

Fine ceramic particles preferably used in the present invention include those of oxides containing a metallic element or a semimetallic element, such as zirconia ($ZrO_2$), zircon ($ZrSiO_4$), silicon dioxide ($SiO_2$), alumina ($Al_2O_3$), cobalt oxide, titanium oxide and boron oxide. Also, fine particles and compounds such as those of nitrides including silicon nitride, those of carbides including silicon carbide and those of various mixtures of the aforementioned materials may be used. Further, the non-ferrous metal oxide bonded to the surface of such fine ceramic particles comprise preferably an oxide containing a metallic element such as, nickel, cobalt, barium or titanium or an oxide containing a semimetallic element such as silicon, boron, gallium, germanium, among others, or non-metallics such as selenium, tellurium, polonium, among others.

In the material thus obtained, the components are homogeneously compounded together. The material is physically excellent in its mechanical properties, corrosion resistivity and heat resistivity and is functionally excellent in its magnetic characteristics, electrical characteristics, etc. Therefore, the composite can find a variety of industrial applications as a material for producing a variety electronic or mechanical parts.

Fig. 1 is a curve showing the relationship between the heating temperature and resistance of a NiAlCrOx semiconductor produced according to the present invention;

Fig. 2 is a curve showing the relationship between the heating temperature and resistance of two further NiAlCrOx semiconductors produced according to the present invention;

Fig. 3 includes curves showing the relationship between current and temperature for a NiAlCrOx semiconductor produced according to the present invention; and

Fig. 4 is a curve showing the relationship between heat flow (dissipation) and temperature for NiAlCrOx semiconductors produced according to the present invention.

DESCRIPTION OF THE PREFERRED EMBODIMENTS

(1) Metal-ceramic composite powder

A non-ferrous metal oxide-ceramic composite powder of fine particles of a ceramic material having a crystalline film, comprising a non-ferrous metal oxide, ionically bonded to the surface of each fine particle, coating the entire surface of the particle, is obtained by steps which will be described below and which are more fully described in our co-pending European Patent application, representative's reference No. 19501 entitled "METAL OXIDE CERAMIC COMPOSITE POWDER AND METHOD OF MANUFACTURING THE SAME" and of even date.

First, at least one magnet having a strong magnetic force is placed in a vessel containing an aqueous solution of one or a combination of various non-ferrous metal chloride or hydrate compositions having a concentration of about 5% to 35% to establish a magnetic field. Then, many pieces of magnetic material such as iron, for example iron pellets having a grain size of about 0.1 mm to 4 mm, are immersed in the aqueous solution of non-ferrous metal chloride, and the solution is thoroughly agitated. Then, the solution is filtered to obtain an aqueous solution of a complex ion.

In the above steps, the aqueous solution of non-ferrous metal chloride or hydrate is brought into contact with the magnetized iron pellets in the vessel. Therefore, many cathodes and anodes are formed as a result of electrolytic ion exchange, and hydrogen ions attracted to the cathodes are discharged as hydrogen gas. Thus, the complex ion solution contains stabilized anions and cations.

An aqueous solution of one, or a combination of various non-ferrous metal chloride or hydrate compositions having a concentration of about 5% of 35% and containing fine particles of a ceramic material having a particle size distribution of about 0.05 micron to several mm, preferably, 0.05 to 20 micron, is separately prepared. The complex ion solution is mixed with this non-ferrous metal chloride solution in a proportion of about 30% to 50% of the total volume. The mixture is thoroughly agitated to provide a composite aqueous solution. This composite aqueous solution is acidic and contains $Cl^-$/ions.

Then, when an aqueous solution of caustic soda having a concentration of about 30% is mixed with the composite aqueous solution containing the fine ceramic particles, crystals of a non-ferrous metal oxide corresponding to the original non-ferrous metal chloride(s) or hydrate(s) are subtantially uniformly deposited on the surface of the fine ceramic particles. The remainder is dilute salt water. The non-ferrous metal species included in the film of metal oxide deposited on the surface of the fine ceramic particles are derived from the complex ions and, preferably, from the complex ions and the metal chloride(s) added with the ceramic material.

The non-ferrous metal oxide-ceramic composite particles are then allowed to precipitate, and the supernatant portion of the solution is discarded. Alternatively, water is separated from the solution by centrifugal separation to leave the precipitate. Then, water is added to the precipitate to wash away the salt. Thereafter, the water remaining still in the precipitate is separated by evaporation, and the precipitate is dried to provide the non-ferrous metal oxide-ceramic composite particles in which the high purity non-ferrous metal oxide crystals are deposited on the surface of the fine ceramic particles.

In the non-ferrous metal oxide-ceramic composite particles thus manufactured, the non-ferrous metal oxide is substantially uniformly deposited on the surface of each of the fine ceramic particles. The size distribution of the composite particles is about 0.1 micron to 25 micron when the original particle size of the fine ceramic particles is about 0.03 micron to 20 micron.

In the non-ferrous metal oxide-ceramic composite powder described above, the non-ferrous metal oxide makes a plating-like ionic bond to the surface of the fine ceramic particles, and the bond is so strong that the non-ferrous metal oxide would not be stripped off even by impartation of mechanical friction or impact.

In the above described procedure the fine ceramic particles used are, preferably, fine particles of zircon ($ZrSiO_4$). However, the present invention is not limited to the use of zircon, and other fine ceramic particles preferably used in the present invention include those of oxides containing a metallic element or a semimetallic element, such as, zirconia ($ZrO_2$), silicon dioxide ($SiO_2$), alumina ($Al_2O_3$), cobalt oxide, titanium oxide, barium oxide and boron oxide. Also fine particles and compounds such as those of nitrides including silicon nitride, those of carbides including silicon carbide and those of various mixtures of the aforementioned materials may be used.

Also, the non-ferrous metal oxide may comprise a metallic element such as cobalt, barium, titanium, nickel, aluminium, copper, chromium, germanium, gallium, magnesium, tin, molydendum, manganese or cadmium, among others or a semimetallic element such as Si, Sa, P, among others, or combinations thereof.

The metal chlorides and hydrates thereof usable with the present invention may be based on various metals.

Those usable, among others, are:

| | | |
|---|---|---|
| $AlCl_3 \cdot 6H_2O$ | $MgCl_2 \cdot 4H_2O$ | $TeCl_4$ |
| $BaCl_2 \cdot 2H_2O$ | $MoCl_5$ | $TlCl$ |
| $BeCl_2$ | $NiCl_2 \cdot 6H_2O$ | $TiCl_4$ |
| $CrCl_3 \cdot 6H_2O$ | $PtCl_4 \cdot 6H_2O$ | $PoCl_2$ |
| $CoCl_2 \cdot 6H_2O$ | $SiCl_4$ | $YCl_3 \cdot 6H_2O$ |
| $CuCl_2 \cdot 2H_2O$ | $AgCl$ | $ZnCl_2$ |
| $CdCl_2 \cdot 2\,1/2H_2O$ | $SrCl_2 \cdot 6H_2O$ | $ZrCl_4$ |
| $GeCl_4$ | $SnCl_2 \cdot 2H_2O$ | |
| $MnCl_2 \cdot 4H_2O$ | $TaCl_5$ | |

These metal chlorides form complex ions as described above. Exemplary of such complex ions are $(Ni_2Cl_3)^{+1}$, $(Ni_2Cl_4)^{+2}$, $(Al_3Cl_7)^{+2}$, $(Cu_3Cl_4)^{+2}$, $(Sr_2Cl_3)^{+1}$, $(Cr_2Cl_5)^{+1}$, etc.

The invention is not limited to the listed compounds and other non-ferrous metal chlorides or hydrates are usable with the present invention, Also, mixtures or composites of the non-ferrous metal oxides, which produce proportional metal oxide deposition, may also be produced. For example, compounds such as Ni Al Cr Ox; Ni Al Ox; Ni Cr Ox; Ni Cr B Ox; Ba Ti Ox; Ba Ti Cu Ox and others may be produced by the same process.

Examples of the multi-component composite compositions which can be used are given below:

1) Ni-series:

| a) | Ni•Co•Ox | b) | Ni•Co•B•Ox |
|---|---|---|---|
| | Ni•Cr•Ox | | Ni•Cr•B•Ox |
| | Ni•Zr•Ox | | Ni•Zr•B•Ox |
| | Ni•Cu•Ox | | Ni•Cu.B•Ox |
| | Ni•Si•Ox | | Ni•Si•B•Ox |
| | Ni•Ti•Ox | | Ni•Ti•B•Ox |
| | Ni•AL•Ox | | Ni•AL•B•Ox |
| | Ni•Mn•Ox | | Ni•Mn•B•Ox |
| | Ni•Mg•Ox | | Ni•Mg•B•Ox |
| | Ni•Ba•Ox | | Ni•Ba•B•Ox |
| | etc. | | etc. |

As the source of the element B, $Na_2B_4O_7$ $10H_2O$ is used.

2) Ba-series:

| Ba•Cu•Ox | Y•Ba•Ca•Ox |
|---|---|
| Ba•La•Ox | Y•Ba•La•Ox |
| Ba•Ti•Ox | Y•Ba•Ti•Ox |
| Ba•Zr•Ox | Y•Ba•Zr•Ox |
| Ba•AL•Ox | Y•Ba•AL•Ox |
| etc. | etc. |

3) Other examples:

Y•Ba•Ti•Cu•Ox

Y•Ba•Ti•Zn•Ox

Y•Ba•Zr•Cu•Ox

Y•Ba•Zr•Pb•Ox

Each of the elements in the composite powders comes from an aqueous solution of each of the corresponding chlorides, such as $NiCl_2.6H_2O$; $CrCl_2.6H_2O$; $CuCl_2.2H_2O$; $BaCl.2H_2O$.

Each of the elements of the homogeneous solid solution, such as Ni, Co, Cr, Ba, Cu and others, has the same composition as that of the composite powders as disclosed in the aforesaid copending application.

Other elements in the HFC homogeneous solid solution such as Si, Ti, A1, Zr, Mg, Mn and others are derived from fine particles of each of their oxides, metal, semimetal, nonmetal.

Up to 20 or more non-ferrous metal chlorides or hydrates, or combinations thereof, can be combined to form composite powders with unique properties. Thus, particles having a uniform distribution of various non-ferrous metals in proportion to their presence in solution can be produced according to the present invention. For example, if 50% by wt. nickel, 30% aluminium and 20% chromium are present, the film coating will contain the same proportion of metal oxides.

Another combination would be 60% Ni, 30% A1 and 10% Cr, which has been found to act as a positive temperature coefficient (PTC) resistor. This custom processing provides non-ferrous metal ceramic composite materials with unique properties, which have application in many industries, not only in the semiconductor field.

The other metal chlorides and hydrates and the multicomponent compositions listed above can be used in the process for forming the article of each example described herein.


(2) Semiconductor


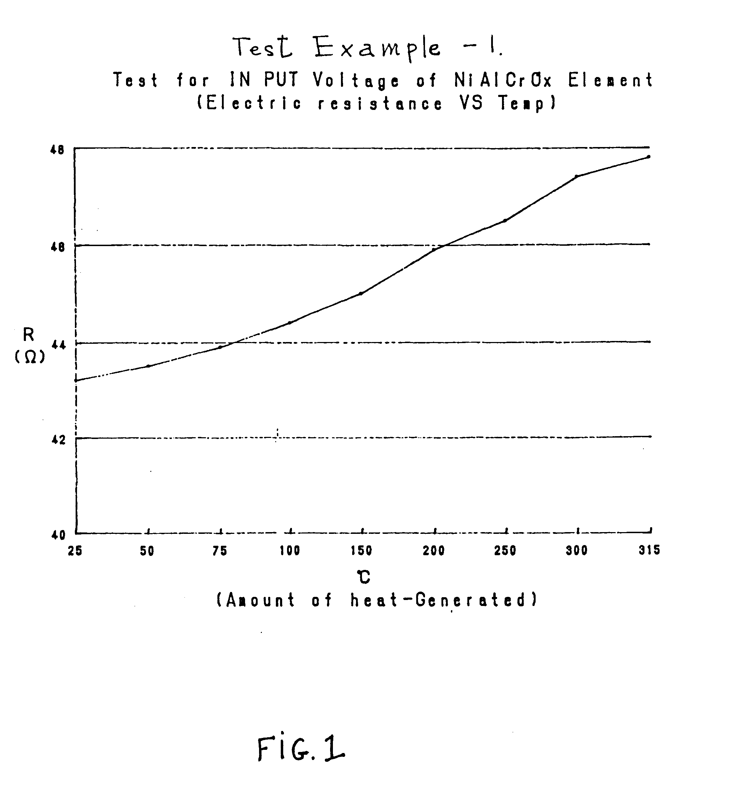

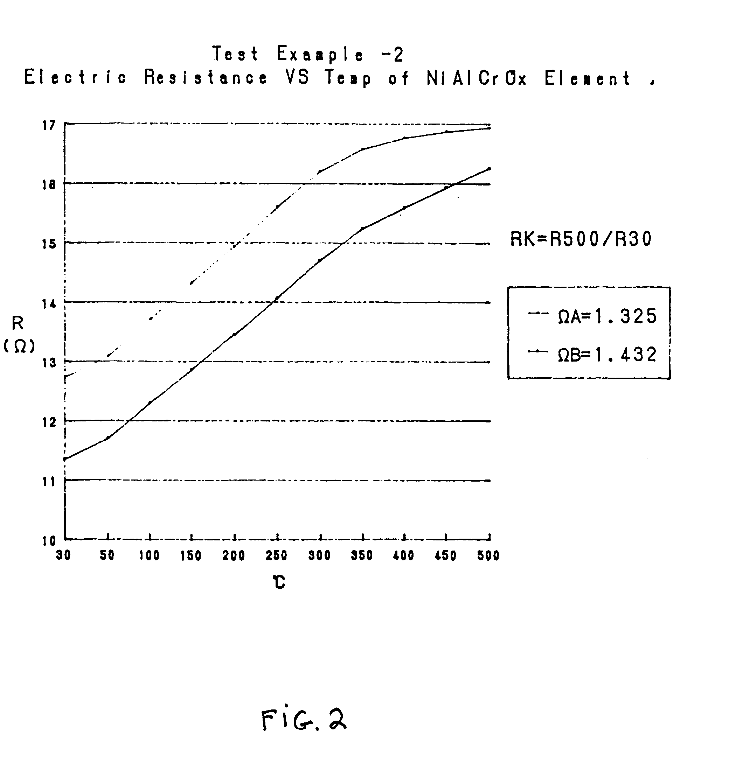

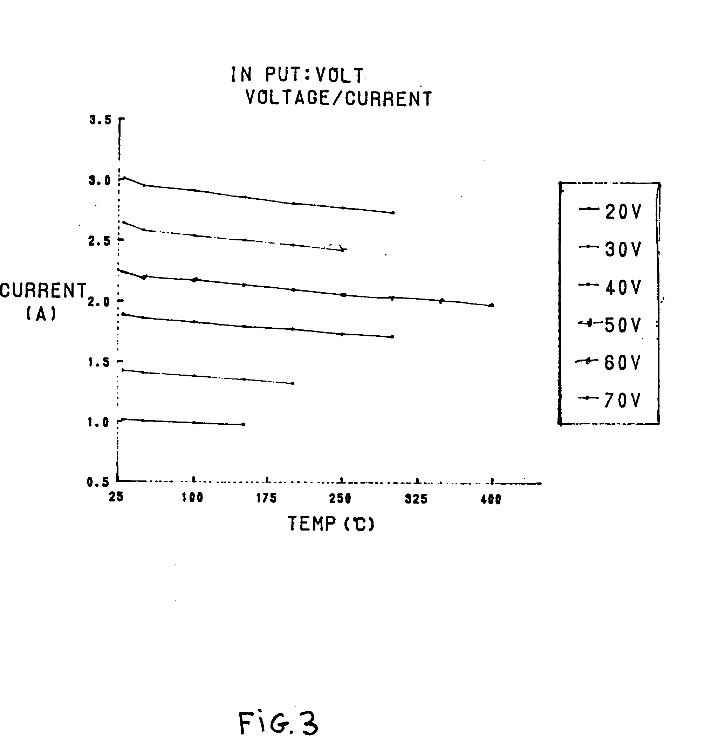

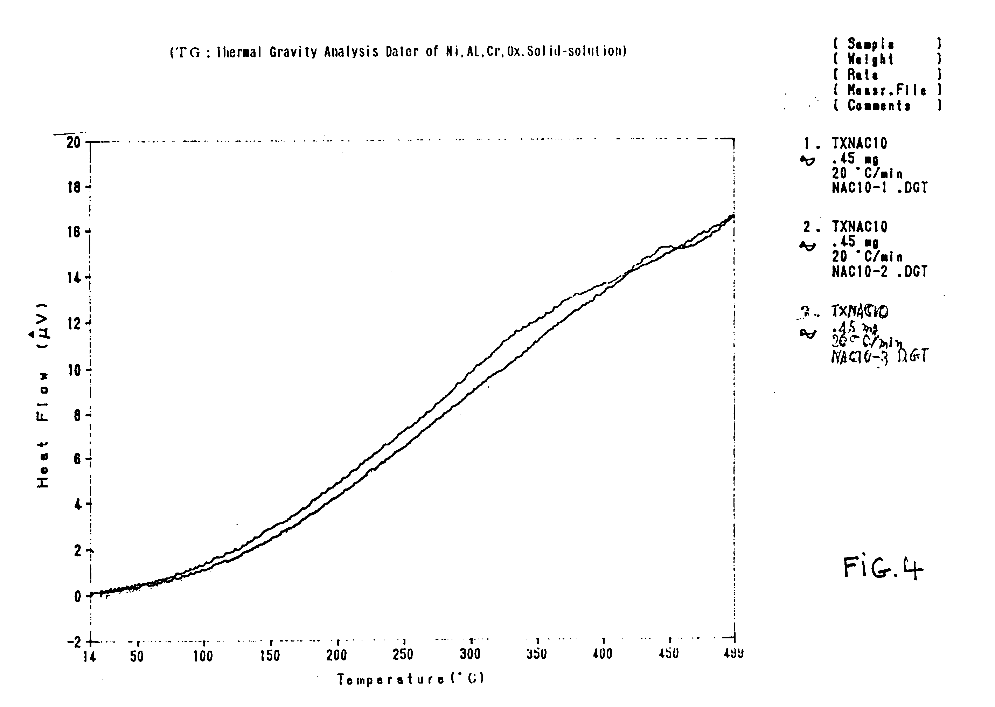

A nickel aluminium chrome oxide ceramic composite powder containing 60% nickel oxide, 30% aluminium oxide and 10% chromium oxide, and having zirconia or zircon as its ceramic component is melted at a high temperature by a high speed plasma spray device to coat an alumina substrate with a melt, and the melt is allowed to cool to form a solid solution of a semiconductor material, coating the substrate. The semiconductor thus formed exhibits an excellent functional property in that its electrical resistance increases exponentially with an increase in the temperature over a wide temperature range of from 30-500°C. (See Figures 1 and 2). Thus, the semiconductor is suitable for use as a material of a temperature sensor. Figure 3 shows that the current flow similarly drops as the resistance increases in these semiconductors.

Referring to Figure 4, a thermal gravity analysis of a nickel aluminum chrome oxide solid solution semicondustor is shown. As is evident, the semiconductor maintains a relatively stable dissipation from 14-500°C. The relationship shown is nearly identical to the relationship obtained with an alumina substrate, establishing that the semiconductor exhibits structural properties similar to alumina, which is commonly used as the substrate for said semiconductors. Since the relationship in heat dissipation is nearly identical to the relationship with the substrate, the semiconductor can operate over a wide range of temperatures without causing stress between the alumina substrate and the semiconductor which may cause failure of the device. Consequently, a material is provided which has structural properties similar to the ceramic substrate, yet has functional properties which can be tailored to produce specific electronic functions, such as displaying a positive temperature coefficient or a negative coefficient, and of course, other properties can be produced by using the different metal combinations in different proportions.

## (3) Sintered Composite

For the manufacture of a sintered composite, non-ferrous metal oxide-ceramic (zircon) composite particles are mixed under agitation with particles of a metal such as iron and/or fine particles of a ceramic material such as zircon, and the mixture to which water or a binder is added is kneaded to prepare a sludge.

This sludge is charged into a mold to which vibration is imparted, and the sludge charged into the mold is heated to vaporize the water. Then, pressure is applied by a pressure plate to the sludge in the vibrating mold and, after heating the sludge again, the sludge is cooled and separated from the mold to obtain a molded block. When water remains still in the molded block, the molded block is dried and then baked in a high-temperature furnace at the atmospheric pressure or a lower pressure. As a result, the fine ceramic particles and/or the metal particles are integrally homogeneously compounded with the non-ferrous metal oxide-ceramic composite particles to provide a sintered composite.

In the sintered composite thus manufactured, the fine ceramic particles and/or the metal particles are homogeneously and dispersely mixed and sintered with the non-ferrous metal oxide-ceramic composite particles. Therefore, the sintered composite has various advantages in that it is wear resistive, heat resistive and corrosion resistive, its hardness is high, its coefficient of thermal expansion is low, it is heat insulating, and it shows satisfactory magnetic characteristics.

## Claims

1. A metal oxide-ceramic composite material comprising a solid solution provided by melting and cooling a metal oxide-ceramic composite powder, characterised in that the metal oxide-ceramic composite powder comprises fine particles of a ceramic material having a crystalline film, comprising a non-ferrous metal oxide, ionically bonded to the surface of each fine particle, coating the entire surface of the particle.

2. A composite material as claimed in claim 1, wherein the oxide includes a plurality of non-ferrous metals.

3. A composite material as claimed in claim 1 or claim 2, wherein the oxide further includes at least one semi-metallic element.

4. A composite material as claimed in any of claims 1-3, wherein the oxide includes nickel, cobalt, barium, aluminium, silicon, copper, titanium, germanium, magnesium, chromium, tin, manganese, molydenum, cadmium, beryllium, tantalum, silver, zirconium, zinc, yttrium, polonium, tellurium, strontium, or platinum.

5. A composite material as claimed in any of the preceding claims, wherein the particle size of the metal oxide-ceramic composite powder is in the range of from 0.1 to 25 microns and the fine ceramic particles therein have an average particle size of from .03 to 20 microns.

6. A composite material as claimed in any of the preceding claims, wherein the oxide is bonded to the surface of each particle by a process comprising the steps of:
immersing pieces of magnetic metal in an aqueous solution of a non-ferrous metal chloride or chloride hydrate in the presence of a magnetic field to provide a complex ion solution;

adding fine particles of a ceramic material and said complex ion solution to an aqueous solution of a non-ferrous metal chloride or chloride hydrate to obtain a composite aqueous solution and;

adding an aqueous solution of alkaline agent to said composite aqueous solution, to cause a reaction resulting in the formation of a film of crystalline non-ferrous metal oxide covering the entire surface of the fine ceramic particles, to provide non-ferrous metal oxide-ceramic composite particles.

7. A composite material as claimed in claim 6, wherein the oxide is bonded to the surface of each particle by precipitation in a reduction reaction of the complex ion solution.

8. A composite material as claimed in claim 7, wherein the non-ferrous metals or semi-metallic elements in the non-ferrous oxide film, are present in proportion to their respective concentrations in the complex ion solution.

9. A composite material as claimed in any of claims 3-8, wherein the semi-metallic element is cobalt, barium or titanium.

10. A composite material as claimed in any of the preceding claims, characterised by comprising a sintered combination of the non-ferrous metal oxide-ceramic composite powder and fine particles of a second ceramic material and/or particles of a metal.

11. A composite material as claimed in any of the preceding claims, wherein the fine particles of ceramic material and the second ceramic material comprise, zircon, zirconia, silicon dioxide, alumina, cobalt oxide, titanium dioxide, barium oxide or boron oxide, or an oxide, a nitride and a carbide of a metallic element or a semi-metallic element.

12. A composite material as claimed in any of the preceding claims wherein the metal oxide-ceramic composite powder is melted by a high-speed plasma device.

Test Example − 1.
Test for IN PUT Voltage of NiAlCrOx Element
(Electric resistance VS Temp)

(Amount of heat−Generated)

FIG.1

Test Example -2
Electric Resistance VS Temp of NiAlCrOx Element .

FIG. 2

IN PUT : VOLT
VOLTAGE/CURRENT

FIG. 3

(TG : Thermal Gravity Analysis Dater of Ni.AL.Cr.Ox.Solid-solution)

FIG.4

EP 0 473 856 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 225 176   (OKURA TECHNO-RESEARCH CO) <br> * the whole document * <br> – – – | 1-8,10-12 | C 04 B 35/00 <br> C 04 B 41/50 <br> C 04 B 32/00 |
| Y | CHEMICAL ABSTRACTS, vol. 87, no. 10, 05 September 1977 Columbus, Ohio, USA page 87; right-hand column; ref. no. 69886G <br> & JP-A-5221299 (TOHO GANRYO KOGYO ET AL) 17.2.77 <br> * abstract * <br> – – – | 1-8,10-12 | |
| Y | EP-A-0 221 765   (OKURA TECHNO-RESEARCH CO) <br> * the whole document * <br> – – – | 1-8,10-12 | |
| A | PATENT ABSTRACTS OF JAPAN vol. 13, no. 111 (C-577)(3459) 16 March 1989, <br> & JP-A-63 285118 (TEIKOKU KAKO KK) 22 November 1988, <br> * the whole document * <br> – – – – – | 1-8,10-12 | |

TECHNICAL FIELDS
SEARCHED (Int. Cl.5)

C 04 B

The present search report has been drawn up for all claims

| Place of search | Date of completion of search | Examiner |
|---|---|---|
| Berlin | 05 December 91 | KUEHNE H C |